(19) **Europäisches Patentamt**

**European Patent Office**

**Office européen des brevets**

(11) Veröffentlichungsnummer: **0 324 936 B1**

(12) **EUROPÄISCHE PATENTSCHRIFT**

(45) Veröffentlichungstag der Patentschrift: **08.04.92**

(51) Int. Cl.5: **C01F 7/02**, C01G 25/00, C01B 21/06

(21) Anmeldenummer: **88120131.3**

(22) Anmeldetag: **02.12.88**

(54) Zirkondotierter Pseudoböhmit, Verfahren zu seiner Herstellung und Anwendung.

(30) Priorität: **19.01.88 DE 3801270**

(43) Veröffentlichungstag der Anmeldung:
**26.07.89 Patentblatt 89/30**

(45) Bekanntmachung des Hinweises auf die Patenterteilung:
**08.04.92 Patentblatt 92/15**

(84) Benannte Vertragsstaaten:
**AT BE CH DE ES FR GB GR IT LI LU NL SE**

(56) Entgegenhaltungen:
**EP-A- 0 113 796**
**DE-A- 3 539 127**
**FR-A- 2 546 769**
**US-A- 4 371 513**
**US-A- 4 769 351**

(73) Patentinhaber: **Degussa Aktiengesellschaft**
**Weissfrauenstrasse 9**
**W-6000 Frankfurt am Main 1(DE)**

(72) Erfinder: **Liu, Anh Thu, Dr.**
**Liebigstrasse 6**
**W-8000 München 22(DE)**
Erfinder: **Schwarz, Rudolf, Dr.**
**Taunusstrasse 2**
**W-8755 Alzenau-Wasserlos(DE)**
Erfinder: **Kleinschmit, Peter, Dr.**
**Wildaustrasse 19**
**W-6450 Hanau 9(DE)**

EP 0 324 936 B1

Rank Xerox (UK) Business Services

**Beschreibung**

Die Erfindung betrifft einen mit Zirkon dotierten Pseudoböhmit, das Verfahren zu seiner Herstellung sowie das aus dem Pseudoböhmit hergestellte, mit Zirkon dotierte γ -Aluminiumoxid, das Verfahren zu dessen Herstellung sowie dessen Verwendung zur Herstellung von Autoabgaskatalysatoren.

Es ist bekannt, wasserhaltiges Aluminiumoxid, welches im wesentlichen Pseudoböhmit enthält, herzustellen (EP-PS 113 796).

Derartige Pseudoböhmite können zur Herstellung von Autoabgaskatalysatoren verwendet werden.

Es ist weiterhin bekannt, zur Herstellung eines Trägerkatalysators zur Reinigung der Abgase von Brennkraftmaschinen einen keramischen Wabenkörper in wäßrige Suspension einzutauchen, die eine Mischung aus Pseudoböhmit und Zirkonoxihydrat enthält (DE-PS 35 39 127).

Bei den bekannten Autoabgaskatalysatoren kann aufgrund der hohen Arbeitstemperaturen eine Sinterung des Grundmaterials und damit eine Desaktivierung durch Oberflächenverlust auftreten.

Die Aufgabe der Erfindung besteht darin, ein Grundmaterial herzustellen, das bei hohen Arbeitstemperaturen eine möglichst geringe Schrumpfung bzw. einen möglichst geringen Oberflächenverlust und damit verbunden eine möglichst geringe Desaktivierung aufweist.

Gegenstand der Erfindung ist ein mit Zirkon dotierter Pseudoböhmit, der die folgenden Eigenschaften aufweist:

Gehalt an Zirkon: 0,5 bis 10 Mol %, bezogen auf Al

Wassergehalt: 20 bis 35 Gew.-%

Summe der anionischen Verunreinigungen <0,5 Gew.-%

Der erfindungsgemäße, mit Zirkon dotierte Pseudoböhmit kann hergestellt werden, indem man Zirkonsalz in berechneter Menge zu einer wäßrigen Aluminiumsulfatlösung gibt, die entstandene Mischung gleichzeitig mit einer Natriumaluminatlauge in eine Wasservorlage mit einer Temperatur von 50 bis 100 °C unter Ausfällen von mit Zirkon dotiertem Aluminiumoxidgel unter Einhaltung eines pH-Wertes von 3,5 bis 8 zudosiert, nach der Zugabe der Aluminiumsulfatlösung den pH-Wert der Suspension durch weitere Zugabe von Natriumaluminatlauge auf 8,5 bis 10,5 einstellt, gegebenenfalls die Suspension bei dem pH-Wert von 8,5 bis 10,5 und der Temperatur von 50 bis 100 °C während eines Zeitraumes bis zu 24 Stunden altert, die gebildeten Pseudoböhmitkristalle abfiltriert und den Filterkuchen mit Wasser auswäscht.

In einer weiteren Ausführungsform der Erfindung kann man das Zirkonsalz in Wasser lösen und diese Lösung gleichzeitig mit der Aluminiumsulfat-Lösung und der Natriumaluminat-Lauge in die Wasservorlage geben.

In einer besonderen Ausführungsform der Erfindung kann man den ausgewaschenen Filterkuchen mit Wasser redispergieren und die Suspension sprühtrocknen.

In einer bevorzugten Ausführungsform der Erfindung kann man die Fällung bei einer Temperatur von 60 bis 80 °C und einem pH-Wert von 4 bis 5 durchführen.

Bevorzugterweise kann man die Alterung bei einer Temperatur von 60 bis 80 °C und einem pH-Wert von 9 bis 9,5 während eines Zeitraumes von einer Stunde bis 5 Stunden durchführen.

Der sprühgetrocknete, mit Zirkon dotierte Pseudoböhmit kann bei einer Temperatur von 700 bis 1100 °C, vorzugsweise 850 bis 950 °C während eines Zeitraumes von 0,5 bis 24 Stunden kalziniert werden.

Dabei wird der Pseudoböhmit in mit Zirkon dotiertes γ -Al$_2$O$_3$ umgewandelt, das die gewünschte spezifische BET-Oberfläche von 145 ± 25 bis 225 ± 25 m$^2$ / g aufweist.

Das Zirkon kann in Form der folgenden Salze eingesetzt werden:

Zirkonchlorid, Zirkonnitrat, Zirkoncarbonat Ein weiterer Gegenstand der Erfindung ist das aus dem erfindungsgemäßen, mit Zirkon dotiertem Pseudoböhmit hergestellte, mit Zirkon dotierte γ-Aluminiumoxid. Dieses γ -Aluminiumoxid hat einen Gehalt an Zirkon von 0,5 bis 10 Mol %, bezogen auf Al, einen Wassergehalt von< 10 Gew.-% und eine Phasenstabilität bis 1050 °C.

Das erfindungsgemäße, mit Zirkon dotierte γ -Aluminiumoxid kann zur Herstellung von Autoabgaskatalysatoren eingesetzt werden.

Aufgrund der Zirkondotierung ist die Temperaturstabilität des γ -Aluminiumoxides deutlich verbessert.

Beispiele

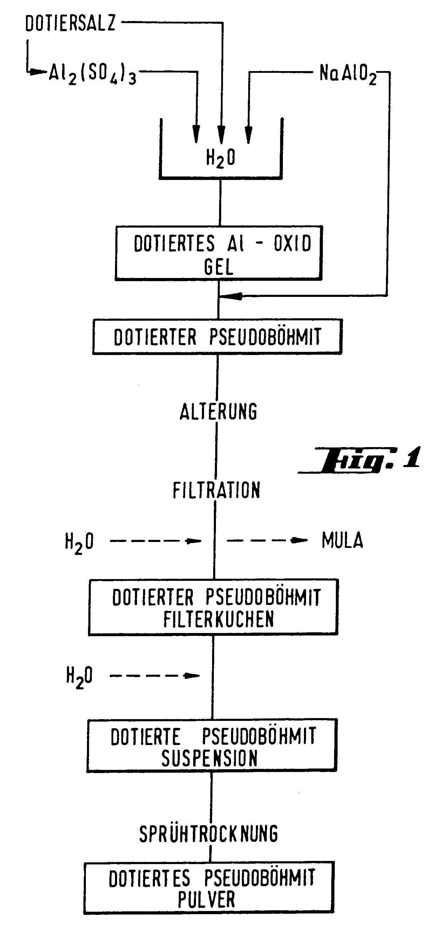

Die Durchführung der Beispiele wird in Figur 1 schematisch beschrieben.

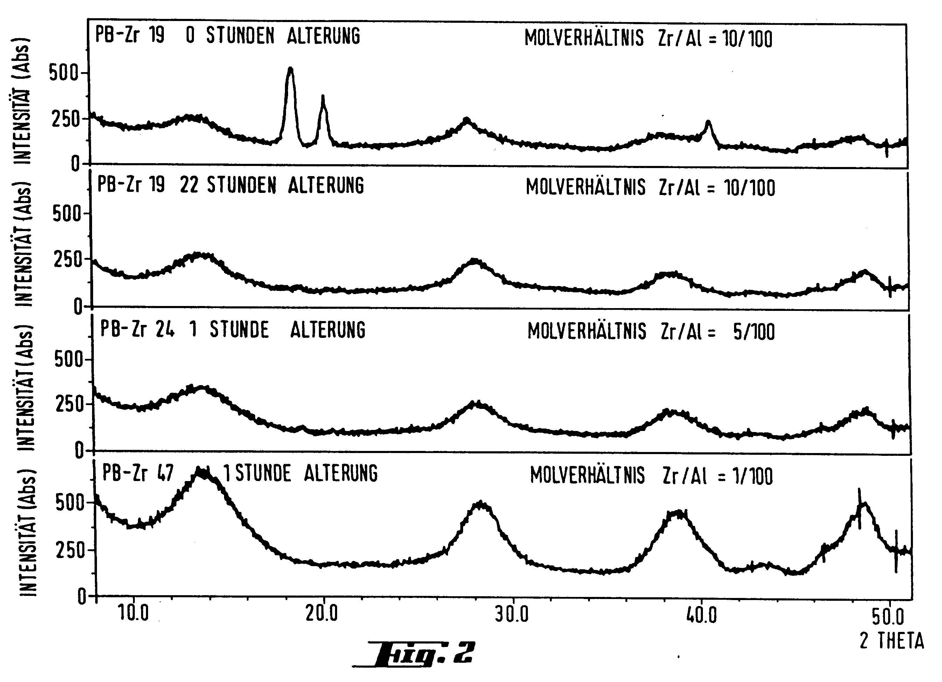

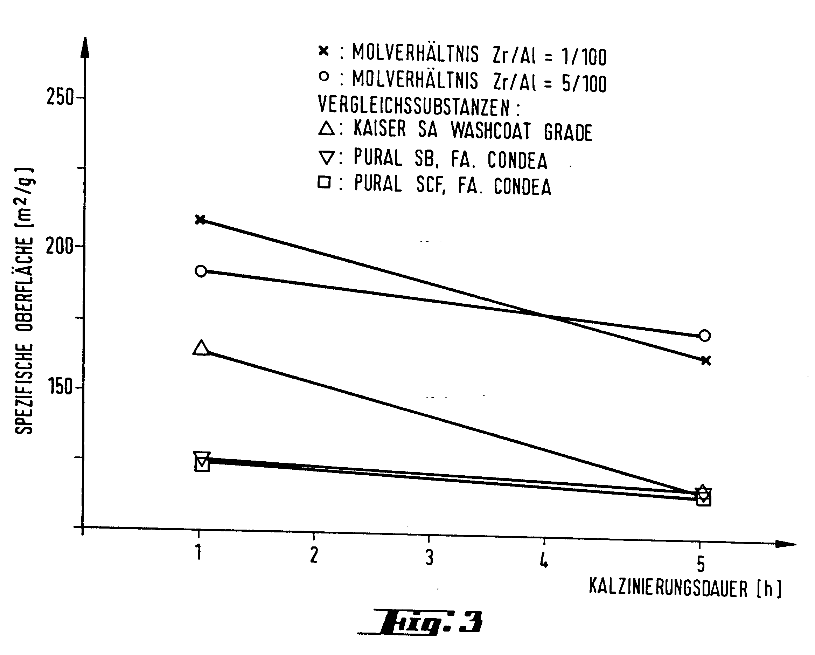

Wie für Pseudoböhmitkristallisationen allgemein bekannt, sind die relevantesten Versuchsparameter die pH- und Temperaturbedingungen der Fällung und des Alterungsprozesses. Es wird der Einfluß des Dotiermaterials sowie des Dotierniveaus (Molverhältnis Zr / Al) auf die Oberflächenstabilisierung und auf die kristallographische sowie chemische Reinheit dargestellt. Die Beispiele und Ergebnisse werden in den Tabellen 1 - 3 zusammengefaßt und in Figur 2 exemplarisch wiedergegeben. Ausgewählte Proben werden bezüglich ihrer Phasen- und Oberflächenstabilität eingehend untersucht und in den Figuren 3 - 6 bekannten käuflichen Produkten (Kaiser SA washcoat grade, Pural SB und Pural SCF der Firma CONDEA) gegenübergestellt.

Die Proben werden sofort nach der pH-Einstellung und nach einer 20- bis 23-stündigen Alterung untersucht. Dabei wird festgestellt, daß bereits geringe Zusätze an Dotierungsmaterial die Pseudoböhmitbildung stark beeinflussen können.

Zusätze von Zirkonchlorid im Molverhältnis Zr/Al = 1/100 (Tabelle 1) und Zr/Al = 5/100 (Tabelle 2) bringen keine grundsätzliche Veränderung in der Pseudoböhmitkristallisation. Ähnlich wie bei der Fällung von reinem Pseudoböhmit kann sich Trihydrat in unterschiedlichen Konzentrationen bilden, wenn die Fällung bei pH = 6 - 8 durchgeführt wird.

Der graduelle Einfluß der Zirkonchloriddotierung auf die Kristallisation bei Fällungs-pH 4 wird in Tabelle 3 wiedergegeben und in Figur 2 veranschaulicht: mit zunehmender Zirkonkonzentration wird das Produkt entweder amorpher oder es bildet sich Trihydrat als Nebenphase, die erst bei einer Alterung verschwindet.

Zusätze von Zirkonnitrat oder -carbonat verursachen eine Verschiebung der Fällung in Richtung von Trihydrat oder amorpher Substanzen (Tabelle 2).

Bei der Herstellung von reinem Pseudoböhmit ist es notwendig, den pH-Wert der Suspension innerhalb eines engen Bereichs um den isoelektrischen Punkt einzustellen, um die Adsorption der Natrium- und Sulfationen zu minimieren.

Durch die Dotierung mit Zirkonchlorid war es jedoch möglich, die chemische Reinheit des Produktes in weitem Maße zu erhöhen, da die Bildung von unlöslichem Sulfat (in Form von basischem Aluminiumoxid) unterbunden bzw. reduziert wird (Tab. 1 bis 3).

Die Bestimmung der spezifischen Oberfläche wird bei gealterten Proben, wie sie frisch nach der Sprühtrocknung anfallen bzw. nach einer Stunde bei 900 °C kalziniert werden, durchgeführt. Die Ergebnisse sind in den Tabellen 1 - 5 aufgeführt.

Die Daten zeigen, daß die Erhöhung der spezifischen Oberflächen durch Optimierung der Fäll- und Alterungsbedingungen für spezifische Zusätze realisiert wird.

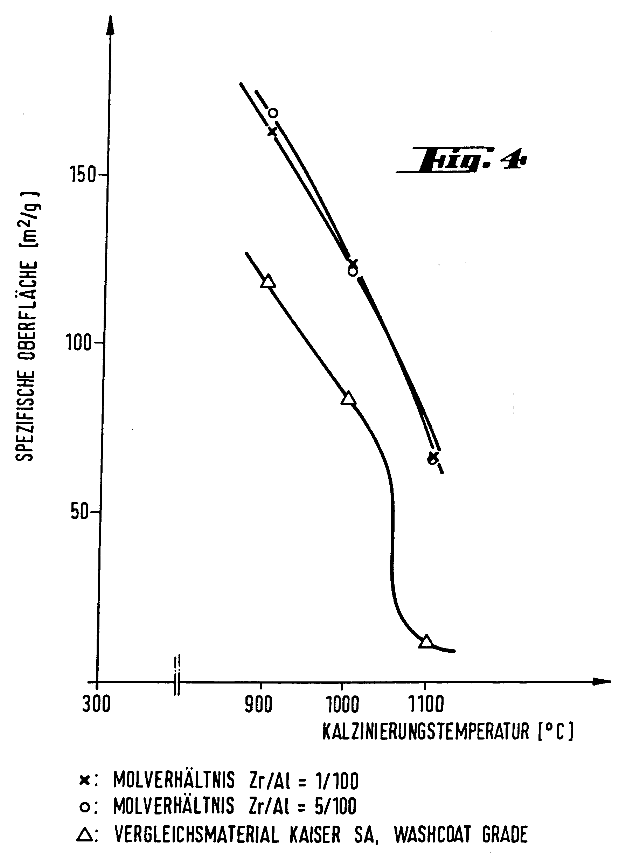

Zirkondotierte Pseudoböhmitproben werden unter unterschiedlichen Bedingungen kalziniert und mit gleichbehandelten kommerziellen Produkten verglichen: die Figuren 3 und 4 zeigen eindeutig die Überlegenheit der erfindungsgemäßen, mit Zirkon dotiertem Pseudoböhmit bzw. $\gamma$-Aluminiumoxide.

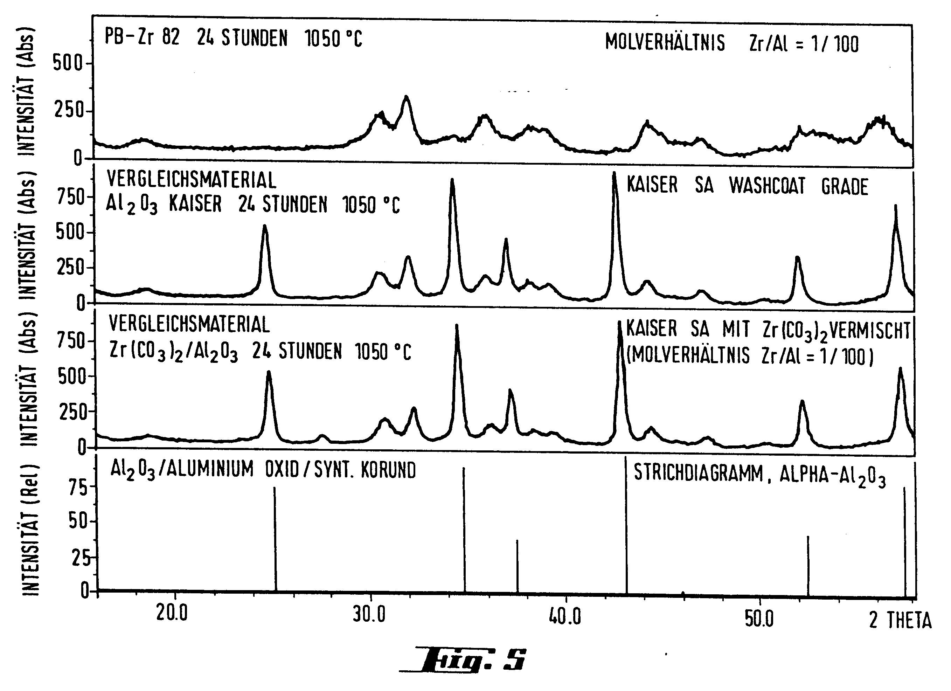

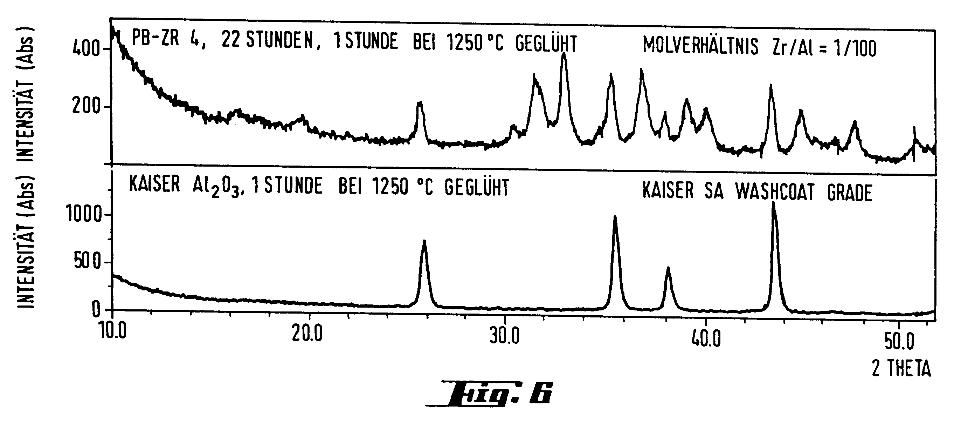

Die Röntgenaufnahmen der kalzinierten Proben (Figuren 5 und 6) geben eine plausible Erklärung für die Oberflächenbeständigkeit der dotierten Versuchsprodukte:
- Bei Kaiser SA ist die Umwandlung in alpha-Aluminiumoxid bei 1050 °C bereits fortgeschritten und bei 1250 °C abgeschlossen.
- Durch Zumischung von Zirkoncarbonat ist keine Verbesserung festzustellen.
- Bei zirkondotiertem Pseudoböhmit ist die gamma-Phase bei 1050 °C praktisch unverändert und bis 1250 °C noch weitgehend erhalten.

Durch Fällung mit Übergangsmetalloxiden werden unter optimierten Bedingungen dotierte Pseudoböhmite erhalten, die hohe spezifische Oberflächen aufweisen. Durch die Dotierung wird die Desaktivierung des Aluminiumoxids unter thermischen Belastungen weitgehend verzögert, so daß die neuen Materialien sich als Träger für Katalysatoren gut eignen und bei sehr hohen Temperaturen (um 1000 °C) eingesetzt werden können.

Die Erfindung wird an Hand der Zeichnung näher erläutert:
Es zeigen

Figur 1     Ein Fließschema des erfindungsgemäßen Herstellverfahrens von mit Zirkon dotiertem Pseudoböhmit.

Figur 2     Den Einfluß des Dotierniveaus auf die Pseudoböhmitkristallisation.

Figur 3     Den Oberflächenverlust in Abhängigkeit von der Kalzinierungsdauer bei 900 °C.

Figur 4     Den Oberflächenverlust in Abhängigkeit von der Kalzinierungstemperatur (1 Stunde Haltezeit).

Figur 5     Die Phasenanalyse nach der Temperatur bei 1050 °C (24 Stunden Haltezeit).

Figur 6     Die Phasenanalyse nach der Temperung bei 1250 °C (1 Stunde Haltezeit).

3

EP 0 324 936 B1

<u>Tabelle 1</u> : Einfluß der Fäll- und Alterungsbedingungen : Dotierung im Molverhälnis Zr / Al = 1 / 100

| Dotierung | Fällung Temp. | pH | Alterung Temp. | pH | Dauer | spez. Oberfläche frisch | kalz. | chemische Analysen Na$_2$O | SO$_4$ | Phasenanalyse[*] a | b |
|---|---|---|---|---|---|---|---|---|---|---|---|
| | (°C) | | (°C) | | (h) | (m$^2$/g) | | (ppm) | (G%) | PB/TH | PB/TH |
| keine | 60 | 4 | 80 | 9 | 20 | 268 | 154 | 30 | 2.07 | m | m |
| ZrCl$_4$ | 60 | 4 | 60 | 9 | 21 | 294 | 159 | 28 | 1.91 | w | m |
| | 80 | 4 | 80 | 9 | 1 | 304 | --- | 80 | 0.11 | - | m |
| | 80 | 4 | 80 | 9 | 20 | 308 | 204 | 77 | <0.1 | m | m |
| | 60 | 4 | 80 | 9.5 | 21 | 243 | 151 | 73 | <0.05 | m | m |
| | 80 | 4 | 80 | 9.5 | 1 | 335 | 183 | 87 | <0.02 | - | m |
| | 60 | 6 | 60 | 9.5 | 23 | 285 | 166 | 30 | <0.1 | m/vs | m/t |
| | 60 | 6 | 80 | 9.5 | 22 | 282 | 171 | 75 | <0.1 | w | m |
| | 80 | 6 | 80 | 9.5 | 21 | 345 | 145 | 290 | <0.1 | m/vs | m |
| | 60 | 8 | 60 | 10 | 21 | 300 | 189 | 65 | <0.1 | m/t | m |
| | 60 | 8 | 80 | 9.5 | 22 | 306 | 190 | 89 | <0.1 | w | m |
| Zr(CO$_3$)$_2$ | 60 | 4 | 80 | 9.5 | 22 | 272 | 148 | 94 | <0.1 | w | m |
| Zr(SO$_4$)$_2$ | 80 | 4 | 80 | 9.0 | 21 | ------------------------nb[**]------------------------------ | | | | | |
| | 80 | 4 | 80 | 9.5 | 21 | ------------------------nb[**]------------------------------ | | | | | |

*   : a = Produkt wurde vor der Alterung isoliert und untersucht
    b = Produktuntersuchung nach der angegebenen Alterungszeit
    PB = Pseudoböhmit        TH = Trihydrat
    t = Spuren        w = schwach        m = mittel        vs = sehr stark
**  : schmieriges, schlecht filtrierbares Produkt, das nicht weiter untersucht wurde.

EP 0 324 936 B1

Tabelle 2 : Einfluß von Anionen : Dotierung mit $ZrCl_4$, $Zr(NO_3)_4$, $Zr(CO_3)_2$ ; Molverhältnis Zr / Al = 5 / 100

| Dotierung | Fällung Temp. | pH | Alterung Temp. | pH | Dauer | spez. Oberfläche frisch | kalz. | chemische Analysen $Na_2O$ | $SO_4$ | Phasenanalyse* a | b |
|---|---|---|---|---|---|---|---|---|---|---|---|
| | (°C) | | (°C) | | (h) | ($m^2$/g) | | (ppm) | (G%) | PB/TH | PB/TH |
| $ZrCl_4$ | 60 | 4 | 60 | 9.5 | 21 | 276 | 163 | 36 | <0.1 | w | w |
| | 60 | 4 | 80 | 9.5 | 22 | 267 | 157 | 79 | <0.1 | m | m |
| | 80 | 4 | 80 | 9.5 | 1 | 345 | 207 | 87 | <0.1 | - | w |
| | 80 | 4 | 80 | 9.5 | 22 | 304 | 192 | 161 | <0.1 | w | m |
| | 60 | 6 | 60 | 9.5 | 22 | 310 | 173 | 93 | <0.1 | w | w/t |
| | 60 | 6 | 80 | 9.5 | 22 | 306 | 164 | 138 | <0.1 | w/vs | m |
| | 60 | 8 | 60 | 9.5 | 22 | 322 | 201 | 152 | <0.1 | w/vs | m/m |
| | 60 | 8 | 80 | 9.5 | 22 | 375 | 203 | 132 | <0.1 | w/s | m |
| | 80 | 8 | 80 | 10 | 22 | 301 | 177 | 212 | <0.1 | m/s | m |
| | 80 | 8 | 80 | 10.5 | 22 | 246 | 152 | 2000 | <0.1 | m/s | m/vs |
| $Zr(NO_3)_4$ | 60 | 4 | 80 | 9.5 | 21 | 352 | 225 | 143 | <0.1 | w/vs | m |
| | 80 | 6 | 80 | 9.5 | 22 | 299 | 174 | 148 | <0.1 | w | w |
| | 80 | 8 | 80 | 9.5 | 22 | 296 | 184 | 225 | <0.1 | w | w |
| $Zr(CO_3)_2$ | 60 | 4 | 80 | 9.5 | 22 | 296 | 184 | 225 | <0.1 | m/vs | m |

\* : a = Produkt wurde vor der Alterung isoliert und untersucht
b = Produktuntersuchung nach der angegebenen Alterungszeit
PB = Pseudoböhmit          TH = Trihydrat
t = Spuren          w = schwach    m = mittel    s = stark          vs = sehr stark

Tabelle 3: Einfluß des Dotierniveaus : Dotierung mit $ZrCl_4$.

| Dotierung | Fällung | | Alterung | | | spez. Oberfläche (m²/g) | | chemische Analysen | | Phasenanalyse | |
|---|---|---|---|---|---|---|---|---|---|---|---|
| | Temp. (°C) | pH | Temp. (°C) | pH | Dauer (h) | frisch | kalz. | Na₂O (ppm) | SO₄ (G%) | a PB/TH | b PB/TH |
| 0,5 Mol% Zr** | 80 | 4 | 80 | 9,5 | 1 | 330 | 185 | 30 | 3,22 | — | m |
| 1 Mol% Zr** | 80 | 4 | 80 | 9,5 | 1 | 335 | 183 | 87 | < 0,02 | — | m |
| 5 Mol% Zr** | 80 | 4 | 80 | 9,5 | 1 | 345 | 207 | 87 | < 0,1 | — | w |
| 10 Mol% Zr** | 60 | 4 | 80 | 9,5 | 22 | 306 | 169 | 630 | < 0,1 | w/vs | w |

** : aus $ZrCl_4$

*** : a = Produkt wurde vor der Alterung isoliert und untersucht
b = Produktuntersuchung nach der angegebenen Alterungszeit
PB = Pseudoböhmit    TH = Trihydrat
A = amorphes Produkt    w = schwach    m = mittel    vs = sehr stark

## Patentansprüche

1. Zirkondotierter Pseudoböhmit, dadurch gekennzeichnet, daß er die folgenden Eigenschaften aufweist:
Gehalt an Zirkon: 0,5 bis 10 Mol %, bezogen auf Al

Wassergehalt: 20 bis 35 Gew.-%

Summe der anionischen Verunreinigungen <0,5 Gew.-%

**2.** Verfahren zur Herstellung des mit Zirkon dotierten Pseudoböhmits, dadurch gekennzeichnet, daß man Zirkonsalz in berechneter Menge zu einer wäßrigen Aluminiumsulfatlösung gibt, die entstandene Mischung gleichzeitig mit einer Natriumaluminatlauge in eine Wasservorlage mit einer Temperatur von 50 bis 100 °C unter Ausfällen von mit Zirkon dotiertem Aluminiumoxidgel unter Einhaltung eines pH-Wertes von 3,5 bis 8 zudosiert, nach der Zugabe der Aluminiunsulfatlösung den pH-Wert der Suspension durch weitere Zugabe von Natriumaluminatlauge auf 8,5 bis 10,5 einstellt, gegebenenfalls die Suspension bei dem pH-Wert von 8,5 bis 10,5 und der Temperatur von 50 bis 100 °C während eines Zeitraumes bis zu 24 Stunden altert, den gebildeten zirkondotierten Pseudoböhmit abfiltriert und den Filterkuchen mit Wasser auswäscht.

**3.** Verfahren nach Anspruch 2, dadurch gekennzeichnet, daß man das Zirkonsalz in Wasser löst und diese Lösung gleichzeitig mit der Aluminiumsulfat-Lösung und der Natriumaluminatlauge in die Wasservorlage gibt.

**4.** Verfahren nach Anspruch 2 oder 3, dadurch gekennzeichnet, daß man den ausgewaschenen Filterkuchen mit Wasser redispergiert und die Suspension sprühtrocknet.

**5.** Zirkondotiertes $\gamma$-Aluminiumoxid mit einem Gehalt an Zirkon von 0,5 bis 10 Mol%, bezogen auf Al, mit einem Wassergehalt von <10 Gew.-%, mit einer Phasenstabilität bis 1050 °C und einer BET-Oberfläche von 145 bis 225 ± 25 m$^2$ / g.

**6.** Verfahren zur Herstellung des mit Zirkon dotierten $\gamma$-Aluminiumoxides gemäß Anspruch 5, dadurch gekennzeichnet, daß man den mit Zirkon dotierten Pseudoböhmit gemäß Anspruch 1 bei einer Temperatur von 700 bis 1100 °C, vorzugsweise 850 bis 950 °C kalziniert.

**7.** Verwendung des mit Zirkon dotierten $\gamma$-Aluminiumoxides gemäß Anspruch 5 zur Herstellung von Autoabgaskatalysatoren.

**Claims**

**1.** Zirconium-doped pseudoboehmite, characterized in that it has the following properties:

zirconium content: 0.5 to 10 mol-%, based on Al

water content: 20 to 35% by weight

sum total of anionic impurities: < 0.5% by weight.

**2.** A process for the production of the zirconium-doped pseudoboehmite, characterized in that zirconium salt is added in a calculated quantity to an aqueous aluminium sulfate solution, the mixture formed is added together with a sodium aluminate liquor to water heated to a temperature of 50 to 100°C with precipitation of zirconium-doped aluminium oxide gel at a pH value maintained at 3.5 to 8, the pH value of the suspension is adjusted to 8.5 to 10.5 after addition of the aluminium sulfate solution by addition of more sodium aluminate liquor, the suspension is optionally aged for up to 24 hours at a pH value of 8.5 to 10.5 and at a temperature of 50 to 100°C, the zirconium-doped pseudoboehmite formed is filtered off and the filter cake is thoroughly washed with water.

**3.** A process as claimed in claim 2, characterized in that the zirconium salt is dissolved in water and the resulting solution is added to the water together with the aluminium sulfate solution and the sodium aluminate liquor.

**4.** A process as claimed in claim 2 or 3, characterized in that the washed filter cake is redispersed with water and the suspension is spray-dried.

**5.** Zirconium-doped $\gamma$-aluminium oxide containing 0.5 to 10 mol-% zirconium, based on Al, and having a water content of < 10% by weight, a phase stability of up to 1050°C and a BET surface of 145 to 225 ± 25 m$^2$/g.

**6.** A process for the production of the zirconium-doped γ-aluminium oxide claimed in claim 5, characterized in that the zirconium-doped pseudoboehmite claimed in claim 1 is calcined at a temperature of 700 to 1100°C and preferably at a temperature of 850 to 950°C.

**7.** The use of the zirconium-doped γ-aluminium oxide claimed in claim 5 for the production of vehicle exhaust catalysts.

**Revendications**

**1.** pseudoboehmite dopée au zirconium caractérisée en ce qu'elle présente les propriétés suivantes:
Teneur en zirconium: 0,5 à 10 % molaire, rapporté à Al.
Teneur en eau: 20 à 35 % en poids.
Total des impuretés anioniques < 0,5 % en poids.

**2.** Procédé de préparation de pseudoboboehmite dopée au zirconium, caractérisé en ce qu'on ajoute du sel de zirconium à la concentration calculée à une solution aqueuse de sulfate d'aluminium, on ajoute le mélange formé simultanément à une solution d'aluminate de sodium dans une quantité d'eau chauffée entre 50 et 100°C en précipitant du gel d'oxyde d'aluminium dopé au zirconium en maintenant un pH compris entre 3,5 et 8, après addition de la solution de sulfate d'aluminium on ajuste le pH de la suspension entre 8,5 et 10,5 par addition supplémentaire de solution d'aluminate de sodium, le cas échéant on mûrit la suspension à un pH compris entre 8,5 et 10,5 et à une température comprise entre 50 et 100°C pendant une période pouvant aller jusqu'à 24 heures, on retient par filtration les cristaux formés de pseudoboehmite et on lave le gâteau de filtre avec de l'eau.

**3.** Procédé selon la revendication 2, caractérisé en ce qu'on dissout le sel de zirconium dans l'eau et qu'on ajoute cette solution en même temps que la solution de sulfate d'aluminium et la solution d'aluminate de sodium dans la quantité d'eau présente.

**4.** Procédé selon la revendication 2 ou 3, caractérisé en ce qu'on redisperse avec de l'eau le gâteau de filtre lavé et on sèche par pulvérisation la suspension.

**5.** Oxyde d'aluminium γ dopé au zirconium ayant une teneur en zirconium comprise entre 0,5 et 10% molaire, par rapport à Al, avec une teneur en eau < 10% en poids, ayant une stabilité de phase jusqu'à 1050°C et une surface BET comprise entre 145 et 225 ± 25 m$^2$/g.

**6.** Procédé de préparation d'oxyde d'aluminium γ dopé au zirconium selon la revendication 5, caractérisé en ce qu'on calcine de la pseudoboehmite dopée au zirconium selon la revendication 1 à une température comprise entre 700 et 1100°C, de préférence entre 850 et 950°C.

**7.** Utilisation de l'oxyde d'aluminium γ dopé au zirconium selon la revendication 5 pour préparer des catalyseurs de pots d'échappement d'automobiles.

DOTIERSALZ ─────────────┐
│
└──► $Al_2(SO_4)_3$ ────┐   ┌──── $NaAlO_2$ ───┐
▼   ▼   ▼
┌─────────────┐
│    $H_2O$   │
└─────────────┘
│
┌──────────────────────────┐
│   DOTIERTES Al - OXID     │
│          GEL              │
└──────────────────────────┘
│
┌──────────────────────────┐
│   DOTIERTER PSEUDOBÖHMIT  │
└──────────────────────────┘
│

ALTERUNG

***Fig. 1***

FILTRATION

$H_2O$ ─ ─ ─ ─► ─ ─ ─ ─► MULA

┌──────────────────────────┐
│   DOTIERTER PSEUDOBÖHMIT  │
│       FILTERKUCHEN        │
└──────────────────────────┘

$H_2O$ ─ ─ ─ ─►

┌──────────────────────────┐
│   DOTIERTE PSEUDOBÖHMIT   │
│        SUSPENSION         │
└──────────────────────────┘

SPRÜHTROCKNUNG

┌──────────────────────────┐
│  DOTIERTES PSEUDOBÖHMIT   │
│          PULVER           │
└──────────────────────────┘

Fig. 2

**Fig. 3**

Legend:

× : MOLVERHÄLTNIS Zr/Al = 1/100
○ : MOLVERHÄLTNIS Zr/Al = 5/100
VERGLEICHSSUBSTANZEN :
△ : KAISER SA WASHCOAT GRADE
▽ : PURAL SB, FA. CONDEA
□ : PURAL SCF, FA. CONDEA

Y-axis: SPEZIFISCHE OBERFLÄCHE [m²/g]

X-axis: KALZINIERUNGSDAUER [h]

EP 0 324 936 B1

**Fig. 4**

x: MOLVERHÄLTNIS Zr/Al = 1/100
o: MOLVERHÄLTNIS Zr/Al = 5/100
△: VERGLEICHSMATERIAL KAISER SA, WASHCOAT GRADE

EP 0 324 936 B1

PB-Zr 82   24 STUNDEN   1050 °C                    MOLVERHÄLTNIS   Zr/Al = 1/100

INTENSITÄT (Abs)

VERGLEICHSMATERIAL
$Al_2O_3$ KAISER   24 STUNDEN   1050 °C            KAISER  SA  WASHCOAT  GRADE

INTENSITÄT (Abs)

VERGLEICHSMATERIAL
$Zr(CO_3)_2/Al_2O_3$  24 STUNDEN  1050 °C          KAISER  SA  MIT  $Zr(CO_3)_2$ VERMISCHT
                                                   (MOLVERHÄLTNIS  Zr/Al = 1/100)

INTENSITÄT (Abs)

$Al_2O_3$/ALUMINIUM OXID/ SYNT. KORUND            STRICHDIAGRAMM, ALPHA-$Al_2O_3$

INTENSITÄT (Rel)

20.0          30.0          40.0          50.0          2 THETA

*Fig. 5*

13

**PB-ZR 4, 22 STUNDEN, 1 STUNDE BEI 1250 °C GEGLÜHT**     **MOLVERHÄLTNIS Zr/Al = 1/100**

**KAISER Al$_2$O$_3$, 1 STUNDE BEI 1250 °C GEGLÜHT**     **KAISER SA WASHCOAT GRADE**

*Fig. 6*

EP 0 324 936 B1